# FASCICULE DE BREVET EUROPEEN

(11) **EP 3 121 503 B1**
(45) Date de publication et mention de la délivrance du brevet: **01.05.2019**
(21) Numéro de dépôt: 16180708.6
(22) Date de dépôt: 22.07.2016
(51) Int. Cl.: F16L 55/46, B25B 27/24

(54) **SYSTEME ET PROCEDE D'INTRODUCTION D'UN TRACEUR DANS UNE CANALISATION**
SYSTEM UND VERFAHREN ZUM EINFÜHREN EINES TRACERS IN EINE KANALISATION
SYSTEM AND METHOD FOR INJECTING A TRACER INTO A PIPELINE

(30) Priorité: 22.07.2015 FR 1556964
(43) Date de publication de la demande: 25.01.2017
(73) Titulaire: GRDF, 75009 Paris (FR)
(72) Inventeur: Daval-Frerot, Benoit, 91700 Sainte-Geneviève-des Bois (FR)
(74) Mandataire: Novagraaf Technologies

(56) Documents cités:
- CN-A- 101 927 475
- GB-A- 2 230 060
- US-A- 3 935 713
- US-A- 4 916 797
- US-B1- 6 253 436

## Description

L'invention concerne le domaine du traçage de canalisations sous pression, en particuliers les canalisations de gaz. Plus particulièrement, l'invention concerne un système et un procédé d'introduction d'un traceur dans une canalisation. L'invention concerne également un traceur.

Les évolutions récentes de la règlementation concernant les canalisations, en particulier les canalisations de gaz, ont tendance à imposer un traçage fiable des canalisations existantes.

Le traçage des canalisations fabriquées à partir de matières électriquement conductrices, par exemple en acier, ne pose pas de problème, puisque celle-ci sont elle-même détectables. En revanche, les canalisations en matière isolante, telle que le PE, ne sont pas détectables, ce qui nécessite de trouver des alternatives en vue de leur traçage.

Le brevet US6380743 décrit un procédé permettant le traçage de telles canalisations. Ce procédé consiste à introduire à l'intérieur d'une canalisation une fibre comportant un émetteur à son extrémité, puis détecter cette fibre a l'aide d'un détecteur électromagnétique.

Cette méthode présente des inconvénients non négligeables. Premièrement, la sécurité de l'opérateur vis-à-vis des éjections de gaz, n'est pas optimum. Par exemple, lors de l'introduction ou du guidage d'un traceur, l'opérateur risque à tout moment de recevoir du gaz au visage.

Deuxièmement, elle impose d'ouvrir la canalisation pour pouvoir effectuer un traçage. Par exemple, dans le cas des canalisations de gaz, il est nécessaire de couper le gaz et de priver le client de gaz pendant la durée de l'intervention. De plus il est nécessaire de démonter puis de remonter les accessoires du coffret avec des outils, puis de vérifier l'étanchéité après intervention à l'aide d'un produit moussant. Ceci cause donc un rallongement du temps d'intervention. Il est également nécessaire dans ce cas de prévenir le client car les vérifications post-intervention nécessitent la présence de celui-ci.

Les documents US 3 935 713 A1 et US 6 253 436 B1 divulguent des systèmes d'introduction d'un traceur dans une canalisation connus de l'état de la technique.

Un objectif de l'invention est de proposer un dispositif d'insertion d'un traceur dans une canalisation sous pression, telles que des canalisations de gaz, qui permette d'améliorer la sécurité de l'opérateur contre les éjections de gaz.

Un autre objectif de l'invention est de proposer un système et un procédé permettant le traçage de canalisation qui soient adaptés au traçage de canalisations sous pression, qui soient simples et fiables et qui permettent de résoudre les problèmes des systèmes connus de l'état de la technique.

L'invention a également pour objectif de proposer un traceur de canalisation qui soit d'une part solide pour pouvoir avancer dans les canalisations, et d'autre part suffisamment flexible pour pouvoir dépasser les obstacles à l'intérieur des canalisations.

Avec ces objectifs en vue, l'invention concerne un système d'introduction d'un traceur selon la revendication 1 dans une canalisation sous pression, caractérisé en ce que ledit système comporte :
- un robinet-sas comprenant une vanne apte à être ouverte et à être fermée, une première extrémité comprenant une première bague de fixation permettant de fixer le robinet-sas de manière étanche à une valve de purge de la canalisation, une deuxième extrémité apte à recevoir une deuxième bague de fixation,
- un dispositif d'extraction d'obus comprenant la deuxième bague de fixation apte à être fixée de manière étanche à la deuxième extrémité du robinet-sas, une tige amovible en rotation et en translation par rapport à ladite deuxième bague de fixation, et apte à extraire et à remettre en place un obus de la valve de purge à travers le robinet-sas, et
- un corps de guidage apte à être fixé de manière étanche à la deuxième extrémité du robinet-sas et à être traversé de manière étanche par le traceur, le corps de guidage et le robinet-sas étant agencés de manière à permettre le passage du traceur dans la canalisation à travers le robinet-sas et la valve de purge de la canalisation, lorsque la première bague de fixation est fixée sur la valve et le corps de guidage est fixé sur la deuxième extrémité du robinet-sas.

Ainsi, le système selon l'invention permet le passage d'un traceur dans une canalisation sous pression. Pour ce faire, les éléments constituant ce système sont agencés de manière à permettre le passage de ce traceur à travers une valve de purge de la canalisation. Une telle valve se trouve par exemple sur un robinet d'une conduite de gaz. Ce système permet de réaliser un traçage sécurisé puisque les fixations et le passage du traceur à travers le corps de guidage sont étanches. Ce système présente également l'avantage de permettre un traçage de canalisation de façon complètement indépendante des clients. Par exemple, dans le cas d'une conduite de gaz, il n'y a plus de nécessité de priver de gaz le client le temps de réaliser le traçage, ni même de le prévenir car le traceur est introduit à partir d'une valve de purge située à l'extérieur du logement, par exemple sur un robinet situé dans le coffret du client.

Par robinet-sas on entend un robinet jouant le rôle d'un sas lorsque l'obus n'est pas en place. Ce robinet-sas comprend une vanne reliée à un manche permettant de l'ouvrir et de la fermer manuellement.

Par traceur on entend un élément flexible apte à être introduit dans une canalisation et comportant des moyens permettant sa détection lors de la progression dans une canalisation.

Par obus on entend un bouchon mobile d'une valve, ce bouchon est généralement un clapet. Ce bouchon permet dans sa position ordinaire de bloquer toute fuite de pression de la conduite. Lorsque l'obus est poussé par un outil, celui-ci permet un échange de pression entre l'intérieur de la conduite et l'extérieur, par exemple pour faire une purge.

Selon l'invention, le corps de guidage comporte au moins deux joints d'étanchéité ajustés au diamètre du traceur. Le fait d'avoir de tels joints permet de garantir une étanchéité autour du traceur et de créer une enceinte de sécurité qui permette d'éviter que l'opérateur ne reçoive de gaz dans le visage lors des opérations.

Avantageusement les joints d'étanchéité sont en Téflon®. Un joint d'étanchéité en Téflon® peut grâce à sa dureté être bien ajusté au diamètre du traceur pour éviter les fuites de gaz et en même temps il facilite le glissement du traceur.

Le corps de guidage comporte une purge d'évacuation située entre les deux joints. Une telle purge permet l'évacuation de gaz arrivant au corps de guidage et ainsi éviter qu'il fuite par le passage du traceur dans le corps de guidage.

Optionnellement, la purge d'évacuation est prolongée par un flexible. Ce flexible permet de conduire le gaz à évacuer au point d'évacuation voulu.

Avantageusement, le flexible est lié à un évent télescopique. L'évent télescopique permet l'évacuation de gaz en hauteur en toute sécurité. Cet évent est par exemple transportable dans un coffret et se fixe à l'aide d'un moyen de fixation tel qu'un serre-joint à main.

Selon une réalisation de l'invention, la tige du dispositif d'extraction d'obus est creuse. Ceci permet que l'obus soit apposé à l'extrémité de la tige et solidarisé par une différence de pression entre l'intérieur de la canalisation se trouvant sous pression d'un côté de l'obus et la tige creuse et ouverte remise à l'air de l'autre côté de l'obus.

Avantageusement, la tige du dispositif d'extraction d'obus comporte une extrémité ayant une forme complémentaire à la forme de l'obus. Ceci permet un dévissage facile de l'obus.

Avantageusement, le dispositif d'extraction d'obus comporte une purge de décompression liée à la tige creuse. Cette purge permet de créer de manière contrôlée une décompression par remise à l'air de la tige. La purge de décompression permet également de vérifier l'étanchéité de la valve suite à la remise en place de l'obus. Cela peut être réalisé en branchant un manomètre à cette vanne de purge. La purge sert également à éviter que l'opérateur ne reçoive de gaz dans la figure lors d'une manipulation.

Avantageusement, le dispositif d'extraction d'obus comporte une molette fixée au tour de la tige. Ceci facilite la manipulation de la tige pour visser, dévisser ou déplacer l'obus.

L'invention concerne également un procédé d'introduction d'un traceur dans une canalisation sous pression comportant au moins une valve de purge comprenant un obus, caractérisé en ce que ce procédé comporte les étapes suivantes :
- on fixe de manière étanche une première extrémité d'un robinet-sas à une valve de purge de ladite canalisation,
- on fixe de manière étanche un dispositif d'extraction d'obus à une deuxième extrémité du robinet-sas,
- on ouvre une vanne du robinet-sas et on glisse une tige du dispositif d'extraction d'obus à travers le robinet sas jusqu'à l'obus de la valve de purge,
- on appose une extrémité de la tige à l'obus, puis on dévisse l'obus et on crée une différence de pression de manière à solidariser l'obus et la tige,
- on retire la tige avec l'obus, puis on referme la vanne du robinet-sas et on retire le dispositif d'extraction d'obus du robinet-sas,
- on fixe de manière étanche à la deuxième extrémité du robinet-sas un corps de guidage apte à être traversé de manière étanche par un traceur, puis on ouvre la vanne du robinet-sas,
- on introduit le traceur dans la canalisation, à travers le corps de guidage, le robinet-sas et la valve de purge.

Selon une réalisation de l'invention, on introduit le traceur dans la canalisation selon une direction choisie, le traceur est enroulé dans un sens et le sens de déroulement du traceur est fonction de la direction choisie. Ceci permet de maitriser le sens d'avancement du traceur dans la canalisation. Le câble ayant une mémoire de forme, de ce fait on le déroule selon la direction qu'on choisit pour permettre l'avancement dans la canalisation dans le sens qu'on choisit.

Selon une autre réalisation de l'invention, la tige du dispositif d'extraction d'obus est creuse et comprend une première extrémité ouverte agencée de manière à venir au contact de l'obus, une purge est fixée à la tige à une ouverture distincte de la première extrémité et pour apposer l'obus à ladite tige on crée une décompression par remise à l'air de la tige par ladite purge. De cette manière, on appose l'obus grâce à l'application d'une différence de pression entre l'intérieur de la canalisation sous pression d'un côté de l'obus et la tige creuse remise à l'air de l'autre côté de l'obus. De plus, en cas de défaut d'étanchéité, cela permet d'évacuer le gaz et de ce fait il ne sera pas reçu par l'opérateur dans le visage.

Avantageusement, le procédé comporte les étapes de retrait du traceur et de remise en place de l'obus suivantes :
- on retire le traceur de la canalisation au moins jusqu'à une partie du robinet-sas située entre la deuxième extrémité du robinet-sas et la vanne du robinet-sas,
- on ferme la vanne du robinet-sas, puis on retire le corps de guidage de la deuxième extrémité du robinet-sas,
- on fixe de manière étanche le dispositif d'extraction d'obus à la deuxième extrémité du robinet-sas,
- on ouvre la vanne du robinet-sas et on glisse la tige du dispositif d'extraction à travers le robinet-sas jusqu'à la valve de purge, l'obus étant apposé à l'extrémité de la tige du dispositif d'extraction d'obus,
- on visse l'obus dans la valve de purge de la canalisation, on vérifie l'étanchéité de la valve, puis on retire la tige de la valve, et du robinet sas,
- on retire le robinet-sas.

Selon une réalisation de l'invention, le procédé selon l'invention met en oeuvre le système d'introduction d'un traceur dans une canalisation selon l'invention et tel que décrit précédemment.

L'invention a aussi pour objet un corps de guidage d'un traceur dans une canalisation sous pression, comportant une première extrémité apte à être fixée de manière étanche à une entrée communiquant avec la canalisation et une deuxième extrémité apte à être traversée de manière étanche par le traceur, ledit corps de guidage comporte au moins un premier joint d'étanchéité dans la première extrémité et au moins un deuxième joint d'étanchéité dans la deuxième extrémité, les joints d'étanchéité étant ajustés au diamètre du traceur.

Le corps de guidage selon l'invention comporte deux joints d'étanchéité, un dans chaque extrémité. Grâce à ces deux joints, l'étanchéité du corps de guidage est renforcée. Ainsi, on diminue le risque que l'opérateur reçoive du gaz au visage lorsque ce corps de guidage est monté sur une canalisation sous pression et que l'opérateur insère le traceur dans cette canalisation.

L'entrée communiquant avec la canalisation est, par exemple, l'entrée du robinet de la canalisation ou l'entrée d'un robinet intermédiaire tel qu'un robinet-sas.

Avantageusement, les joints d'étanchéité sont en Téflon®. Un joint d'étanchéité en Téflon® peut grâce à sa dureté être bien ajusté au diamètre du traceur pour éviter les fuites de gaz et en même temps il facilite le glissement du traceur.

Selon une réalisation de l'invention, le corps de guidage comporte une purge d'évacuation située entre les deux joints. Une telle purge permet l'évacuation de gaz arrivant au corps de guidage et ainsi éviter qu'il fuite par le passage du traceur dans le corps de guidage.

Optionnellement, la purge d'évacuation est prolongée par un flexible. Ce flexible permet de conduire le gaz à évacuer au point d'évacuation voulu.

Avantageusement, le flexible est lié à un évent télescopique. L'évent télescopique permet l'évacuation de gaz en hauteur en toute sécurité. Cet évent est par exemple transportable dans un coffret et se fixe à l'aide d'un moyen de fixation tel qu'un serre-joint à main.

Selon une réalisation de l'invention, le corps de guidage comporte une première extrémité pouvant être fixée de manière étanche au robinet sas et une deuxième extrémité, et en ce que le système comporte en outre un boîtier contenant le traceur et pourvu d'une unique ouverture reliée de manière étanche, par exemple par un joint torique, à la deuxième extrémité du corps de guidage, ledit boitier étant pourvu de moyens permettant d'enrouler et de dérouler le traceur à travers ladite deuxième extrémité.
Ce boitier permet un rangement du câble à l'abri des usures et des salissures extérieures et lui évite d'avoir des déformations liées à un mauvais rangement.
Par ailleurs, le câble peut se déplacer librement entre le boîtier et le robinet-sas à travers le corps de guidage sans qu'il soit nécessaire d'assurer une étanchéité directement sur le câble, puisque le boîtier, le robinet-sas et le corps de guidage ont la même pression que la canalisation.
Avantageusement, les moyens permettant d'enrouler et dérouler le traceur comportent une manivelle.
Avantageusement, le boîtier est au moins partiellement transparent, par exemple formé de plexiglas, ce qui permet de visualiser à la fois l'avancement ou le retrait du traceur et les repères marqués sur le traceur.

L'invention porte aussi sur un procédé mettant en oeuvre le corps de guidage selon l'invention, pour insérer un traceur dans une canalisation sous pression.

L'invention concerne également un traceur qui comprend un élément flexible métallique recouvert d'un matériau électriquement isolant, ledit traceur comprenant à une première extrémité des moyens de guidage agencés de manière à permettre un guidage et un dépassement d'obstacles de ladite première extrémité dans la canalisation.

Le traceur selon l'invention comprend un élément flexible métallique, ce qui lui procure une solidité pour pouvoir être poussé et ainsi avancer dans les canalisations. Le revêtement par un matériau isolant renforce la solidité et la rigidité de ce traceur pour éviter un pliage lors de son avancement dans une canalisation, pliage qui peut être causé par la rencontre d'un obstacle. D'autre part, ce traceur comprend des moyens agencés pour permettre le guidage de ce traceur et le dépassement d'obstacles par celui-ci.

Avantageusement, les moyens de guidage comprennent une forme courbée à la première extrémité du traceur. La forme courbée permet de dévier le traceur lorsque cette forme courbée rencontre un obstacle dans la canalisation.

Avantageusement, les moyens de guidage comportent au moins une olive. On désigne par olive une bille ovale percée et soudée ou fixée autrement au traceur. Le fait d'avoir des olives à l'extrémité du câble permet également un meilleur passage des obstacles lors de l'avancement dans la canalisation.

Selon un mode de réalisation, les moyens de guidage comportent deux olives et un segment du traceur courbé situé entre les deux olives. Le fait d'avoir à l'extrémité du traceur un segment courbé délimité par deux olives permet encore un meilleur passage des obstacles lors de l'avancement dans la canalisation.

Selon une autre réalisation de l'invention, l'élément flexible métallique est un câble comprenant des fils d'acier torsadés. Les fils d'acier torsadés procurent à la fois de la solidité, pour permettre au traceur d'être poussé à l'intérieur de la canalisation, et de la flexibilité pour faciliter son orientation.

La souplesse et/ou la rigidité de ce câble est déterminée par le nombre de fils d'acier torsadés, leur diamètre et le diamètre global du câble.

Avantageusement, la première extrémité du traceur est dénudée. Le fait que l'extrémité soit dénudée la rend plus flexible que le reste du traceur. De ce fait, le passage d'obstacles devient plus facile.

Avantageusement, le traceur comporte un repère indiquant un retrait suffisant du traceur pour fermer la vanne d'un robinet communiquant avec la canalisation robinet-sas sans risquer d'interférer avec le traceur. Le robinet communiquant avec la canalisation peut, par exemple être un robinet de la canalisation ou un robinet-sas fixé à un robinet de la canalisation. Un tel repère permet de savoir, lorsque l'on retire le traceur de la canalisation, que celui-ci a été retiré du robinet-sas pour procéder ensuite à la fermeture de la vanne de ce robinet-sas.

Avantageusement, le matériau électriquement isolant recouvrant l'élément flexible métallique est dur et résistant aux abrasions mécaniques par des aspérités dans les canalisations. Un tel matériau permet au traceur d'avancer dans une canalisation avec un minimum de risque d'être abîmé par les aspérités de la canalisation.

D'autres caractéristiques et/ou avantages apparaitront à la lecture de la description suivante, d'un mode de réalisation préféré, donné à titre d'exemple non limitatif, en relation avec les dessins annexés, parmi lesquels :
- la figure 1 est une vue d'un robinet d'une conduite de gaz comportant une valve de purge ;
- la figure 2a est une vue du robinet-sas, selon l'invention et d'un robinet d'une conduite de gaz comprenant une valve de purge ;
- La figure 2b est une représentation de l'extracteur d'obus, selon l'invention ;
- La figure 2c est une représentation du corps de guidage, selon l'invention ;
- La figure 2d est une vue de coupe du corps de guidage selon l'axe AA' de la figure 2c ;
- la figure 3 est une vue d'un traceur selon l'invention.

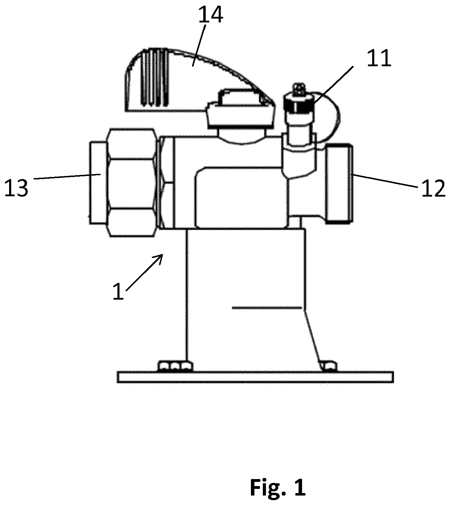

Un exemple de robinet 1 d'une canalisation de gaz est illustré sur la Figure 1. Ce robinet est généralement situé à l'extérieur de la maison ou de l'appartement du client, par exemple dans le coffret gaz du client. Il comporte une valve de purge 11 permettant de réaliser des purges ou des gonflements des canalisations, par exemple pour tester l'étanchéité. Une telle valve n'est pas forcément liée à un robinet 1 et peut se trouver à d'autres endroits de la canalisation.

Le robinet 1 comporte aussi une entrée 12, une sortie 13 et une manette 14 permettant d'ouvrir et de fermer la vanne du robinet 1.

À l'intérieur de la valve de purge 11 se trouve un obus mobile, non représenté, généralement en forme d'un clapet. Grâce au système selon l'invention, un tel robinet 1 est parfaitement adapté pour permettre l'introduction d'un traceur dans la canalisation à travers la valve de purge 11, sans devoir couper le gaz au client et sans même devoir le prévenir.

Pour pouvoir insérer un traceur à l'intérieur de la conduite, il est nécessaire de démonter l'obus. Un tel démontage nécessite de prendre des précautions pour éviter que le gaz s'échappe.

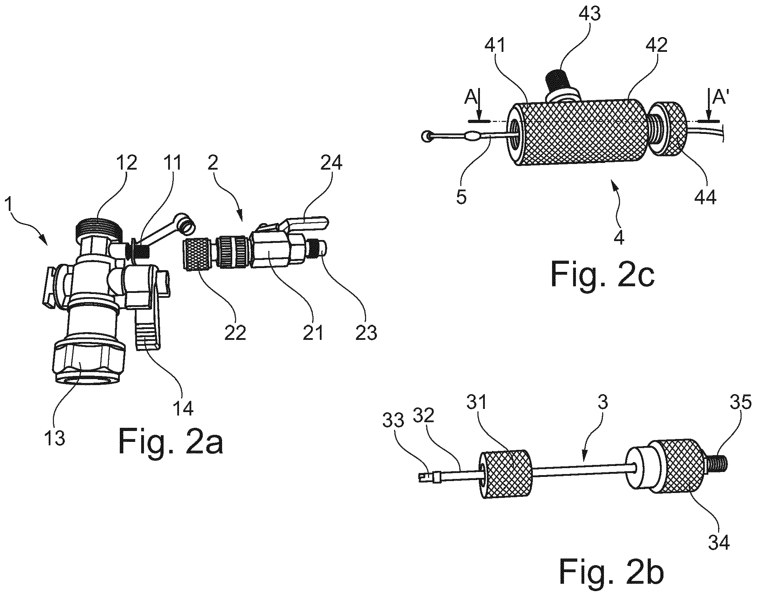

Un exemple de système selon l'invention, permettant l'introduction d'un traceur 5 dans une canalisation à travers une telle valve 11 de purge est représenté par les figures 2a, 2b et 2c. Ce système comporte un robinet-sas 2, un dispositif d'extraction d'obus 3 et un corps de guidage 4.

Le robinet-sas 2 comporte un corps de robinet 21 comprenant une première extrémité 22 en forme de bague pouvant être fixée de manière étanche par vissage sur une valve de purge 11 d'une canalisation. Le corps de robinet 21 comprend également une deuxième extrémité 23 pouvant recevoir une bague de fixation. À l'intérieur du corps de robinet 21 se trouve une vanne pouvant être ouverte ou fermée par le manche 24.

Le dispositif d'extraction d'obus 3 comporte une bague de fixation 31 pouvant être fixée de manière étanche par vissage sur la deuxième extrémité 23 du robinet-sas 2. Le dispositif d'extraction d'obus 3 comprend aussi une tige d'extraction d'obus 32. Cette tige 32 est mobile en rotation et en translation par rapport à la bague de fixation 31. La tige 32 a une première extrémité 33 destinée à venir au contact de l'obus et comprend une forme adaptée à la forme de l'obus pour permettre d'apposer cette première extrémité 33 sur l'obus en vue de le dévisser. Optionnellement, cette tige 32 est creuse et ouverte à sa deuxième extrémité pour permettre de créer une différence de pression entre l'intérieur de la canalisation se trouvant sous pression et l'intérieur de la tige remis à l'air. De cette manière lorsque l'obus est dévissé, celui-ci est collé à la tige 32 par l'effet de cette différence de pression, ce qui facilite le retrait de l'obus.

La tige 32 comporte, une deuxième extrémité ouverte. De façon optionnelle, cette deuxième extrémité de la tige 32 comporte une purge 35. Cette purge 35 permet notamment d'éviter que l'opérateur ne reçoive du gaz s'échappant de la canalisation au moment du dévissage ou du retrait de l'obus. Cette purge 35 permet aussi de contrôler la remise à l'air de la tige 32. On peut prévoir que cette purge soit liée à un évent. La tige comporte également de façon optionnelle, une molette 34 permettant de faciliter les manipulations de la tige 32 et de manière générale le dispositif d'extraction d'obus 3.

Le corps de guidage 4 comprend une première extrémité 41 permettant à ce corps de guidage 4 d'être fixé de manière étanche par vissage à la deuxième extrémité 23 du robinet-sas 2. Il comporte également une deuxième extrémité 42 adaptée pour permettre un passage de manière étanche du traceur 5 dans le robinet-sas 2, puis dans la canalisation, lorsque le robinet-sas 2 est fixé sur la valve de purge 11 par la première extrémité 22 et que le corps de guidage 4 est fixé à la deuxième extrémité 23 du robinet-sas 2 par sa première extrémité 41.

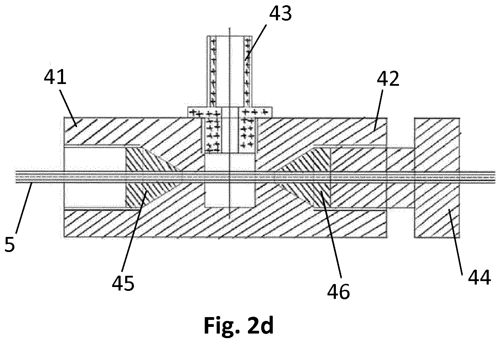

Pour assurer l'étanchéité, le corps de guidage 4 comporte à chacune de ses deux extrémités 41, 42 un joint d'étanchéité 45, 46 ajusté au diamètre du traceur 5 comme cela est visible sur la figure 2d. De façon optionnelle, ces deux joints 45, 46 sont en Téflon® et de manière également optionnelle ils ont une forme conique. En outre, pour améliorer encore plus leur étanchéité, ces deux joints 45, 46 peuvent être légèrement comprimés, pour l'un par le vissage de la première extrémité 41 du corps de guidage 4 sur la deuxième extrémité 23 du robinet-sas 2. Pour l'autre, par le vissage d'une molette 44 sur la deuxième extrémité 42.

Le corps de guidage 4 comporte également une purge d'évacuation 43 située entre les deux joints 45, 46. Cette purge permet l'évacuation de gaz arrivant au corps de guidage et ainsi d'éviter qu'il fuite par le passage du traceur 5 dans le corps de guidage. De cette manière, on évite toute fuite de gaz vers l'opérateur lors des opérations.

Afin de permettre une évacuation de gaz par cette purge 43 en toute sécurité, celle-ci peut être prolongée par un flexible jusqu'à un évent qui permette une évacuation en hauteur, par exemple à 2.5 m ou plus. Optionnellement, cette purge est également liée à un manomètre pour détecter d'éventuelles fuites de gaz à évacuer.
Selon une variante de réalisation, non illustrée, le système comporte un boîtier étanche contenant le traceur 5 et pourvu d'une unique ouverture reliée de manière étanche, par exemple par un joint torique, à la deuxième extrémité 42 du corps de guidage. Ce boitier est pourvu de moyens permettant d'enrouler et de dérouler le traceur 5 à travers la deuxième extrémité 42 du corps de guidage.
Un avantage de ce boitier est qu'il permet un rangement du câble à l'abri des usures et des salissures extérieures et lui évite d'avoir des déformations liées à un mauvais rangement.
Par ailleurs, le câble peut se déplacer librement entre le boîtier et le robinet-sas 2 à travers le corps de guidage 4 sans qu'il soit nécessaire d'assurer une étanchéité directement sur le câble 5, puisque le boîtier, le robinet-sas et le corps de guidage ont la même pression que la canalisation.
Ainsi, selon la présente variante de réalisation, le corps de guidage ne comporte pas les joints 45, 46 et n'est pas lié à l'atmosphère pour évacuer les éventuelles fuites liées à un défaut d'étanchéité. En effet les éventuelles fuites sont maintenant retenues dans le boitier étanche.
Les moyens permettant d'enrouler et de dérouler le traceur peuvent par exemple comporter une manivelle actionnée à la main par l'opérateur, l'étanchéité entre la manivelle et le boitier étant alors assurée par exemple par un ou plusieurs joints toriques. Les moyens d'enroulement sont destinés à permettre le déplacement du traceur dans la canalisation. Différents moyens d'enroulement sont connus de l'homme du métier, l'enrouleur manuel n'étant qu'un exemple parmi d'autres.
L'utilisation d'un boitier étanche selon cette variante de réalisation est ainsi particulièrement avantageux puisque outre la protection du traceur contre les pollutions extérieures, le boitier permet de simplifier l'étanchéité du dispositif : l'étanchéité entre le câble 5 et le corps de guidage 4 n'est plus nécessaire puisque le traceur est maintenant contenu dans le boitier qui est à la même pression que le corps de guidage .
Avantageusement, le boîtier est partiellement ou totalement transparent, par exemple formé de plexiglas, ce qui permet de voir l'avancement et le retrait du traceur 5 ainsi que les repères marqués sur le traceur 5.

Pour introduire le traceur 5 dans la canalisation, on procède comme suit :
- on fixe la première extrémité 22 du robinet-sas 2 sur la valve de purge 11,
- on fixe la bague de fixation 31 du dispositif d'extraction d'obus 3 à la deuxième extrémité 23 du robinet-sas 2,
- on ouvre une vanne du robinet-sas 2 et on glisse la tige 32 du dispositif d'extraction d'obus 3 à travers le robinet-sas 2 jusqu'à l'obus de la valve de purge 11,
- on appose l'extrémité 33 de la tige 32 sur l'obus, puis on dévisse l'obus,
- de manière optionnelle, lorsque la tige comporte une purge 35, on réalise une décompression par remise à l'air de la tige,
- on retire la tige 32 avec l'obus collé à l'extrémité 33, puis on referme la vanne du robinet-sas 2, et ensuite on retire le dispositif d'extraction d'obus 3 du robinet-sas 2,
- on fixe à la deuxième extrémité 23 du robinet-sas 2 le corps de guidage 4 par sa première extrémité 41, puis on ouvre la vanne du robinet-sas 2,
- le traceur 5 étant prépositionné au travers du corps de guidage 4, on introduit le traceur 5 dans la canalisation, à travers le robinet-sas 2 et la valve de purge 11 en faisant coulisser le traceur 5 au travers du corps de guidage 4.

Lors de cette introduction du traceur 5 dans la canalisation, le traceur 5 étant enroulé dans un sens et ayant une mémoire de forme, on le déroule selon la direction qu'on choisit pour son avancement dans la canalisation. En d'autres termes, on guide l'avancement du traceur 5 dans la canalisation notamment grâce à sa mémoire de forme.

Pendant que la première extrémité du traceur 5 progresse dans la canalisation, on procède à la détection de celui-ci et donc de la canalisation.

Par exemple, la deuxième extrémité du traceur 5 est liée à un dispositif électronique pour permettre au traceur 5 d'émettre un signal électromagnétique qui sera suivi par un appareil de détection pour réaliser un traçage de la canalisation.

À la fin de l'opération, on procède au retrait du traceur 5 et à la remise en place de l'obus selon les étapes suivantes :
- on retire le traceur 5 de la canalisation et au moins jusqu'à une partie du robinet-sas 2 située entre la deuxième extrémité 23 du robinet-sas 2 et la vanne du robinet-sas 2,
- on vérifie que la partie 55 du traceur est visible pour s'assurer que le traceur 5 est complètement ressorti et qu'une partie du traceur 5 n'est pas encore dans le robinet-sas 2.
- on ferme la vanne du robinet-sas 2, puis on retire le corps de guidage 4 de la deuxième extrémité 23 du robinet-sas 2,
- on fixe la bague de fixation 31 du dispositif d'extraction d'obus 3 à la deuxième extrémité 23 du robinet-sas 2,
- on ouvre la vanne du robinet-sas 2 et on glisse la tige 32 du dispositif d'extraction d'obus 3 à travers le robinet-sas 2 jusqu'à la valve de purge 11, l'obus étant apposé à l'extrémité 33 de la tige 32 du dispositif d'extraction d'obus 3,
- on visse l'obus dans la valve de purge 11, on vérifie l'étanchéité de la valve 11, puis on retire la tige 32 de la valve 11, et du robinet-sas 2, et
- on retire le robinet-sas 2.

Selon un deuxième mode de réalisation de l'invention, non représenté, le corps de guidage est agencé pour être monté directement sur l'entrée 12 du robinet 1. Ce corps de guidage comprend les mêmes caractéristiques que le corps de guidage 4 précédemment décrit à l'exception de la première extrémité qui est adaptée pour être montée directement sur l'entrée 12 du robinet 1.

Selon une variante de réalisation, le corps de guidage de ce deuxième mode de réalisation, est adapté pour recevoir un traceur de type connu, notamment un traceur intégré dans une fibre de verre.

Selon une autre variante de réalisation, le corps de guidage de ce deuxième mode de réalisation, est adapté pour recevoir un traceur 5 selon l'invention tel que décrit ci-après.

Pour introduire le traceur dans la canalisation en utilisant le corps de guidage selon le deuxième mode de réalisation, on procède comme suit :
- on coupe l'arrivée de gaz et on libère un accès à l'entrée 12 du robinet 1 de la canalisation, la vanne du robinet 1 de la canalisation étant en position de fermeture ;
- on fixe la première extrémité 41 du corps de guidage à l'entrée du robinet 1, puis on ouvre la vanne du robinet 1 en tournant la manette 14 ;
- le traceur étant repositionné au travers du corps de guidage 4, on introduit le traceur dans la canalisation, à travers le robinet 1 en faisant coulisser le traceur au travers du corps de guidage 4.

Lorsque le traçage de la canalisation est terminé, on procède comme suit pour le retrait du traceur :
- on retire le traceur de la canalisation au moins jusqu'à une partie du robinet 1 située entre l'entrée du robinet 1 et la vanne du robinet 1 ;
- on ferme la vanne du robinet 1, puis on retire le corps de guidage 4 de l'entrée 12 du robinet 1 ;
- On remet la canalisation à son état initial.

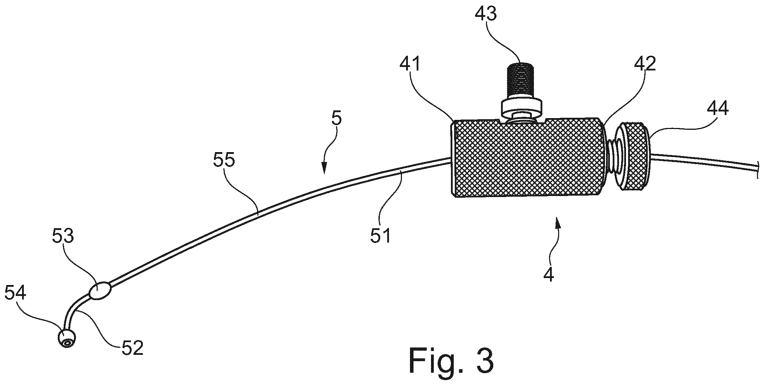

La figure 3 représente un traceur 5 selon l'invention pouvant être introduit dans une canalisation sous pression, telle qu'une canalisation de gaz, à travers une valve de purge 11. Ce traceur 5 comprend un élément flexible métallique 51 recouvert d'un matériau électriquement isolant. Cet élément flexible métallique est, par exemple, un câble constitué par un ensemble de fils d'acier torsadés. L'avantage des fils d'acier torsadés est qu'ils procurent à la fois de la solidité pour permettre au traceur 5 d'être poussé à l'intérieur de la canalisation et de la flexibilité pour faciliter son orientation.

La souplesse ou la rigidité de ce câble est déterminée par le nombre de fils d'acier torsadés, leur diamètre et le diamètre global du câble. Ainsi, il est possible en tenant compte de ces variables de trouver un compromis entre la rigidité, la flexibilité et le diamètre du câble. Ce diamètre doit notamment tenir compte du diamètre de la valve. Par exemple, dans le cas de la valve d'un robinet de gaz, le diamètre de celle-ci étant d'environ 3 mm, le diamètre global du traceur ne doit pas dépasser 2.8 mm.

Selon une réalisation de l'invention, l'élément flexible métallique est un câble de frein d'un véhicule automobile.

Le revêtement isolant du traceur 5 a deux fonctions. D'une part, il renforce la solidité et la rigidité du traceur 5 pour éviter un pliage lors de son avancement dans une canalisation. Un tel pliage peut notamment être causé par la rencontre d'un obstacle. D'autre part, ce revêtement sert également à isoler électriquement l'élément métallique pour éviter que le signal électromagnétique envoyé pour permettre le traçage de la canalisation, ne soit transmis à d'autres éléments conducteurs de la canalisation, tels que les robinets, ce qui peut causer une perte de signal ou une mesure imprécise.

Avantageusement, le revêtement isolant est choisi de telle sorte qu'il soit résistant aux abrasions mécaniques par des aspérités dans les canalisations. Ceci permet au traceur d'avancer dans une canalisation avec un minimum de risque d'être abîmé par les aspérités de la canalisation.

La première extrémité du traceur comprend un segment courbée 52 pour faciliter le guidage de ce traceur et le dépassement d'obstacles par celui-ci, par exemple lorsqu'il rencontre un coude de la canalisation. On peut également renforcer ce guidage dans la canalisation grâce à la mémoire de forme de celui-ci. En effet, le traceur étant enroulé dans un sens, on le déroule selon la direction qu'on choisit pour son avancement dans la canalisation. De cette manière on contrôle mieux l'orientation du traceur 5.

De manière optionnelle, le traceur 5 comporte également deux olives 53, 54 aux deux extrémités du segment courbé 52. Ces olives sont des billes ovales percées fixée sur le traceur 5, par exemple par soudage ou sertissage. Le fait d'avoir ces olives 53, 54 à l'extrémité du traceur 5, notamment du câble dans cet exemple, permet également un meilleur passage des obstacles lors de l'avancement dans la canalisation. Ces olives 53, 54 peuvent évidement être à un nombre différent de deux.

Avantageusement, la première extrémité 52 du traceur est dénudée. Le fait que cette extrémité 52 soit dénudée la rend encore plus flexible que le reste du traceur. De ce fait, le traceur 5 peut traverser les obstacles avec plus de facilité.

De manière optionnelle, le traceur 5 comporte un repère 55, par exemple une coloration différente d'un segment du traceur 5. Ce repère permet à l'opérateur lorsqu'il retire le traceur 5 de savoir que celui-ci à été suffisamment retiré. Cela permet par exemple, de savoir que l'on peut fermer la vanne du robinet-sas 2 en toute sécurité, sans interférer avec le traceur. Ce repère peut évidement être d'une forme différente.

## Revendications

1. Système d'introduction d'un traceur (5) dans une canalisation sous pression, ledit système comportant :
- un robinet-sas (2) comprenant une vanne apte à être ouverte et à être fermée, une première extrémité comprenant une première bague de fixation (22) permettant de fixer le robinet-sas de manière étanche à une valve de purge (11) de la canalisation, une deuxième extrémité (23) apte à recevoir une deuxième bague de fixation (31, 41),
- un dispositif d'extraction d'obus (3) comprenant la deuxième bague de fixation (31) apte à être fixée de manière étanche à la deuxième extrémité (23) du robinet-sas (2), une tige (32) amovible en rotation et en translation par rapport à ladite deuxième bague de fixation (31), et apte à extraire et à remettre en place un obus de la valve de purge (11) à travers le robinet-sas (2), et
- un corps de guidage (4) apte à être fixé de manière étanche à la deuxième extrémité (23) du robinet-sas (2) et à être traversé de manière étanche par le traceur (5),
le corps de guidage (4) et le robinet-sas (2) étant agencés de manière à permettre le passage du traceur (5) dans la canalisation à travers le robinet-sas (2) et la valve de purge (11) de la canalisation, lorsque la première bague de fixation (22) est fixée sur la valve (11) et le corps de guidage (4) est fixé sur la deuxième extrémité (23) du robinet-sas le corps de guidage (4) comportant au moins deux joints d'étanchéité (45, 46) ajustés au diamètre du traceur (5), **caractérisé en ce que** le corps de guidage (4) comporte une purge d'évacuation (43) située entre les deux joints (45, 46).

2. Système d'introduction d'un traceur (5) selon la revendication 1, **caractérisé en ce que** les joints d'étanchéité (45, 46) sont en Téflon®.

3. Système d'introduction d'un traceur (5) selon l'une des revendications 1 à 2 **caractérisé en ce que** la tige (32) du dispositif d'extraction d'obus (3) est creuse.

4. Système d'introduction d'un traceur (5) selon l'une des revendications 1 à 3, **caractérisé en ce que** la tige (32) du dispositif d'extraction d'obus (3) comporte une extrémité (33) ayant une forme complémentaire à la forme de l'obus.

5. Système d'introduction d'un traceur (5) selon l'une des revendications 1 à 4 **caractérisé en ce que** le dispositif d'extraction d'obus (3) comporte une purge de décompression (35) liée à la tige (32) creuse.

6. Système d'introduction d'un traceur (5) selon l'une des revendications 1 à 5, **caractérisé en ce que** le dispositif d'extraction d'obus (3) comporte une molette (34) fixée au tour de la tige (32).

7. Système d'introduction d'un traceur (5) selon l'une des revendications 1 à 6 **caractérisé en ce que** le corps de guidage comporte une première extrémité (41) pouvant être fixée de manière étanche au robinet sas (2) et une deuxième extrémité (42), et **en ce que** le système comporte en outre un boîtier contenant le traceur (5) et pourvu d'une unique ouverture reliée de manière étanche à la deuxième extrémité (42) du corps de guidage, ledit boitier étant pourvu de moyens permettant d'enrouler et de dérouler le traceur (5) à travers ladite deuxième extrémité (42).

8. Système d'introduction d'un traceur (5) selon la revendication 7 **caractérisé en ce que** les moyens permettant d'enrouler et dérouler le traceur (5) comportent une manivelle.

9. Système d'introduction d'un traceur (5) selon l'une des revendications 7 et 8, **caractérisé en ce que** le boîtier est au moins partiellement transparent.

10. Procédé d'introduction d'un traceur (5) dans une canalisation sous pression comportant au moins une valve de purge (11) comprenant un obus, **caractérisé en ce que** ce procédé met en oeuvre un système selon l'une des revendication 1 à 9 et comporte les étapes suivantes :
- on fixe de manière étanche une première extrémité (22) d'un robinet-sas (2) à une valve de purge (11) de ladite canalisation,
- on fixe de manière étanche un dispositif d'extraction d'obus (3) à une deuxième extrémité (23) du robinet-sas (2),
- on ouvre une vanne du robinet-sas (2) et on glisse une tige (32) du dispositif d'extraction d'obus (3) à travers le robinet-sas (2) jusqu'à l'obus de la valve de purge (11),
- on appose une extrémité (33) de la tige (32) à l'obus, puis on dévisse l'obus, on retire la tige (32) avec l'obus, puis on referme la vanne du robinet-sas (2) et on retire le dispositif d'extraction d'obus (3) du robinet-sas (2),
- on fixe de manière étanche à la deuxième extrémité (23) du robinet-sas (2) un corps de guidage (4) apte à être traversé de manière étanche par le traceur (5), puis on ouvre la vanne du robinet-sas (2),
- on introduit le traceur (5) dans la canalisation, à travers le corps de guidage (4), le robinet-sas (2) et la valve de purge (11).

11. Procédé d'introduction d'un traceur (5) selon la revendication 10, **caractérisé en ce que** l'on introduit le traceur (5) dans la canalisation selon une direction choisie, **en ce que** le traceur (5) est enroulé dans un sens et **en ce que** le sens de déroulement du traceur (5) est fonction de la direction choisie.

12. Procédé d'introduction d'un traceur (5) selon l'une des revendications 10 ou 11, **caractérisé en ce que** la tige (32) du dispositif d'extraction d'obus (3) est creuse et comprend une première extrémité ouverte (33) agencée de manière à venir au contact de l'obus, **en ce qu'**une purge (35) est fixée à la tige à une ouverture distincte de la première extrémité (33) et **en ce que** pour fixer l'obus à ladite tige (32) on crée une décompression par remise à l'air de la tige (32) par ladite purge (35).

13. Procédé d'introduction d'un traceur (5) selon l'une des revendications 10 à 12, **caractérisé en ce que** le procédé comporte les étapes de retrait du traceur (5) et de remise en place de l'obus suivantes :
- on retire le traceur (5) de la canalisation au moins jusqu'à une partie du robinet-sas (2) située entre la deuxième extrémité (23) du robinet-sas (2) et la vanne du robinet-sas (2),
- on ferme la vanne du robinet-sas (2), puis on retire le corps de guidage (4) de la deuxième extrémité du robinet-sas (2),
- on fixe de manière étanche le dispositif d'extraction d'obus (3) à la deuxième extrémité (23) du robinet-sas (2),
- on ouvre la vanne du robinet-sas (2) et on glisse la tige (32) du dispositif d'extraction d'obus (3) à travers le robinet-sas (2) jusqu'à la valve de purge (11), l'obus étant apposé à l'extrémité (33) de la tige (32) du dispositif d'extraction d'obus (3),
- on visse l'obus dans la valve de purge (11) de la canalisation, on vérifie l'étanchéité de la valve (11), puis on retire la tige (32) de la valve (11), et du robinet sas (2),
- on retire le robinet-sas (2).

## Patentansprüche

1. System zum Einführen eines Tracers (5) in eine unter Druck stehende Rohrleitung, wobei das System umfasst:
- einen Schleusenhahn (2), umfassend ein Ventil, das geöffnet und geschlossen werden kann, ein erstes Ende, das einen ersten Befestigungsring (22) umfasst, der es ermöglicht, den Schleusenhahn dicht an einem Ablassventil (11) der Rohrleitung zu befestigen, ein zweites Ende (23), das einen zweiten Befestigungsring (31, 41) aufnehmen kann,
- eine Ventileinsatz-Auszugsvorrichtung (3), umfassend den zweiten Befestigungsring (31), der dicht am zweiten Ende (23) des Schleusenhahns (2) befestigt werden kann, einen Schaft (32), der in Bezug auf den zweiten Befestigungsring (31) dreh- und translationsbeweglich herausnehmbar ist und einen Ventileinsatz durch den Schleusenhahn (2) hindurch aus dem Ablassventil (11) herausziehen und wieder einsetzen kann, und
- einen Führungskörper (4), der dicht am zweiten Ende (23) des Schleusenhahns (2) befestigt und vom Tracer (5) dicht durchlaufen werden kann,
wobei der Führungskörper (4) und der Schleusenhahn (2) so eingerichtet sind, dass sie den Durchlauf des Tracers (5) durch den Schleusenhahn (2) und das Ablassventil (11) der Rohrleitung hindurch in die Rohrleitung ermöglichen, wenn der erste Befestigungsring (22) am Ventil (11) befestigt ist und der Führungskörper (4) am zweiten Ende (23) des Schleusenhahns (2) befestigt ist, wobei der Führungskörper (4) mindestens zwei Dichtungen (45, 46) umfasst, die auf den Durchmesser des Tracers (5) abgestimmt sind, **dadurch gekennzeichnet, dass** der Führungskörper (4) einen Entlüftungsablass (43) umfasst, der zwischen den zwei Dichtungen (45, 46) liegt.

2. System zum Einführen eines Tracers (5) nach Anspruch 1, **dadurch gekennzeichnet, dass** die Dichtungen (45, 46) aus Teflon® sind.

3. System zum Einführen eines Tracers (5) nach einem der Ansprüche 1 bis 2, **dadurch gekennzeichnet, dass** der Schaft (32) der Ventileinsatz-Auszugsvorrichtung (3) hohl ist.

4. System zum Einführen eines Tracers (5) nach einem der Ansprüche 1 bis 3, **dadurch gekennzeichnet, dass** der Schaft (32) der Ventileinsatz-Auszugsvorrichtung (3) ein Ende (33) umfasst, das eine zur Form des Ventileinsatzes komplementäre Form aufweist.

5. System zum Einführen eines Tracers (5) nach einem der Ansprüche 1 bis 4, **dadurch gekennzeichnet, dass** die Ventileinsatz-Auszugsvorrichtung (3) einen Druckentlastungsablass (35) umfasst, der mit dem hohlen Schaft (32) verbunden ist.

6. System zum Einführen eines Tracers (5) nach einem der Ansprüche 1 bis 5, **dadurch gekennzeichnet, dass** die Ventileinsatz-Auszugsvorrichtung (3) ein Rändelrad (34) umfasst, das um den Schaft (32) herum befestigt ist.

7. System zum Einführen eines Tracers (5) nach einem der Ansprüche 1 bis 6, **dadurch gekennzeichnet, dass** der Führungskörper ein erstes Ende (41), das dicht am Schleusenhahn (2) befestigt werden kann, und ein zweites Ende (42) umfasst, und dadurch, dass das System weiter ein Gehäuse umfasst, das den Tracer (5) enthält und mit einer einzigen Öffnung versehen ist, die dicht mit dem zweiten Ende (42) des Führungskörpers verbunden ist, wobei das Gehäuse mit Mitteln versehen ist, die es ermöglichen, den Tracer (5) durch das zweite Ende (42) hindurch aufzuwickeln und abzuwickeln.

8. System zum Einführen eines Tracers (5) nach Anspruch 7, **dadurch gekennzeichnet, dass** die Mittel, die es ermöglichen, den Tracer (5) aufzuwickeln und abzuwickeln, eine Kurbel umfassen.

9. System zum Einführen eines Tracers (5) nach einem der Ansprüche 7 und 8, **dadurch gekennzeichnet, dass** das Gehäuse mindestens teilweise durchsichtig ist.

10. Verfahren zum Einführen eines Tracers (5) in eine unter Druck stehende Rohrleitung, die mindestens ein Ablassventil (11) umfasst, das einen Ventileinsatz umfasst, **dadurch gekennzeichnet, dass** dieses Verfahren ein System nach einem der Ansprüche 1 bis 9 einsetzt und die folgenden Schritte umfasst:
- ein erstes Ende (22) eines Schleusenhahns (2) wird dicht an einem Ablassventil (11) der Rohrleitung befestigt,
- eine Ventileinsatz-Auszugsvorrichtung (3) wird dicht an einem zweiten Ende (23) des Schleusenhahns (2) befestigt,
- ein Ventil des Schleusenhahns (2) wird geöffnet und ein Schaft (32) der Ventileinsatz-Auszugsvorrichtung (3) wird durch den Schleusenhahn (2) hindurch bis zum Ventileinsatz des Ablassventils (11) eingeschoben,
- ein Ende (33) des Schafts (32) wird auf den Ventileinsatz aufgesetzt, dann wird der Ventileinsatz abgeschraubt, der Schaft (32) mit dem Ventileinsatz wird zurückgezogen, dann wird das Ventil des Schleusenhahns (2) wieder geschlossen und die Ventileinsatz-Auszugsvorrichtung (3) aus dem Schleusenhahn (2) zurückgezogen,
- ein Führungskörper (4), der vom Tracer (5) dicht durchlaufen werden kann, wird dicht am zweiten Ende (23) des Schleusenhahns (2) befestigt, dann wird das Ventil des Schleusenhahns (2) geöffnet,
- der Tracer (5) wird durch den Führungskörper (4), den Schleusenhahn (2) und das Ablassventil (11) hindurch in die Rohrleitung eingeführt.

11. Verfahren zum Einführen eines Tracers (5) nach Anspruch 10, **dadurch gekennzeichnet, dass** der Tracer (5) in eine gewählte Richtung in die Rohrleitung eingeführt wird, dadurch, dass der Tracer (5) in einer Richtung aufgewickelt ist, und dadurch, dass die Abwickelrichtung des Tracers (5) von der gewählten Richtung abhängig ist.

12. Verfahren zum Einführen eines Tracers (5) nach einem der Ansprüche 10 oder 11, **dadurch gekennzeichnet, dass** der Schaft (32) der Ventileinsatz-Auszugsvorrichtung (3) hohl ist und ein erstes offenes Ende (33) umfasst, das so eingerichtet ist, dass es mit dem Ventileinsatz in Berührung kommt, dadurch, dass ein Ablass (35) am Schaft an einer Öffnung befestigt ist, die sich vom ersten Ende (33) unterscheidet, und dadurch, dass um den Ventileinsatz am Schaft (32) zu befestigen, eine Druckentlastung durch Entlüften des Schafts (32) über den Ablass (35) geschaffen wird.

13. Verfahren zum Einführen eines Tracers (5) nach einem der Ansprüche 10 bis 12, **dadurch gekennzeichnet, dass** das Verfahren die folgenden Schritte des Zurückziehens des Tracers (5) und des Wiedereinsetzens des Ventileinsatzes umfasst:
- der Tracer (5) wird aus der Rohrleitung mindestens bis zu einem Teil des Schleusenhahns (2) zurückgezogen, der zwischen dem zweiten Ende (23) des Schleusenhahns (2) und dem Ventil des Schleusenhahns (2) liegt,
- das Ventil des Schleusenhahns (2) wird geschlossen, dann wird der Führungskörper (4) aus dem zweiten Ende des Schleusenhahns (2) zurückgezogen,
- die Ventileinsatz-Auszugsvorrichtung (3) wird dicht am zweiten Ende (23) des Schleusenhahns (2) befestigt,
- das Ventil des Schleusenhahns (2) wird geöffnet und der Schaft (32) der Ventileinsatz-Auszugsvorrichtung (3) wird durch den Schleusenhahn (2) hindurch bis zum Ablassventil (11) geschoben, wobei der Ventileinsatz am Ende (33) des Schafts (32) der Ventileinsatz-Auszugsvorrichtung (3) aufgesetzt ist,
- der Ventileinsatz wird in das Ablassventil (11) der Rohrleitung eingeschraubt, die Dichtigkeit des Ventils (11) wird kontrolliert, dann wird der Schaft (32) vom Ventil (11) und aus dem Schleusenhahn (2) zurückgezogen,
- der Schleusenhahn (2) wird abgezogen.

## Claims

1. System for introducing a tracer (5) into a pressurised pipe, said system comprising:
- a valve-lock (2) comprising a valve capable of being opened and of being closed, a first end comprising a first fastening ring (22) allowing to fasten the valve-lock in a sealed manner to a purge valve (11) of the pipe, a second end (23) capable of receiving a second fastening ring (31, 41),
- a core-extraction device (3) comprising the second fastening ring (31) capable of being fastened in a sealed manner to the second end (23) of the valve-lock (2), a rod (32) removable in rotation and in translation with respect to said second fastening ring (31), and capable of extracting and of putting back in place a core of the purge valve (11) through the valve-lock (2), and
- a guide body (4) capable of being fastened in a sealed manner to the second end (23) of the valve-lock (2) and of having the tracer (5) pass through it in a sealed manner,
the guide body (4) and the valve-lock (2) being arranged in such a way as to allow the passage of the tracer (5) into the pipe through the valve-lock (2) and the purge valve (11) of the pipe, when the first fastening ring (22) is fastened onto the valve (11) and the guide body (4) is fastened onto the second end (23) of the valve-lock (2) the guide body (4) comprising at least two sealing joints (45, 46) adjusted to the diameter of the tracer (5), **characterised in that** the guide body (4) comprises an evacuation purge (43) located between the two joints (45, 46).

2. System for introducing a tracer (5) according to claim 1, **characterised in that** the sealing joints (45, 46) are made of Teflon®.

3. System for introducing a tracer (5) according to one of claims 1 to 2, **characterised in that** the rod (32) of the core-extraction device (3) is hollow.

4. System for introducing a tracer (5) according to one of claims 1 to 3, **characterised in that** the rod (32) of the core-extraction device (3) comprises an end (33) having a shape complementary to the shape of the core.

5. System for introducing a tracer (5) according to one of claims 1 to 4, **characterised in that** the core-extraction device (3) comprises a decompression purge (35) linked to the hollow rod (32).

6. System for introducing a tracer (5) according to one of claims 1 to 5, **characterised in that** the core-extraction device (3) comprises a wheel (34) fastened to the perimeter of the rod (32).

7. System for introducing a tracer (5) according to one of claims 1 to 6, **characterised in that** the guide body comprises a first end (41) which can be fastened in a sealed manner to the lock valve (2) and a second end (42), and **in that** the system further comprises a case containing the tracer (5) and provided with a single opening connected in a sealed manner to the second end (42) of the guide body, said case being provided with means allowing to coil and uncoil the tracer (5) through said second end (42).

8. System for introducing a tracer (5) according to claim 7, **characterised in that** the means allowing to coil and uncoil the tracer (5) comprise a crank.

9. System for introducing a tracer (5) according to one of claims 7 and 8, **characterised in that** the case is at least partly transparent.

10. Method for introducing a tracer (5) into a pressurised pipe comprising at least a purge valve (11) comprising a core, **characterised in that** this method implements a system according to one of claims 1 to 9 and comprises the following steps:
- a first end (22) of a valve-lock (2) is fastened in a sealed manner to a purge valve (11) of said pipe,
- a core-extraction device (3) is fastened in a sealed manner to a second end (23) of the valve-lock (2),
- a valve of the valve-lock (2) is opened and a rod (32) of the core-extraction device (3) is slid through the valve-lock (2) up to the core of the purge valve (11),
- an end (33) of the rod (32) is attached to the core, then the core is unscrewed, the rod (32) is removed with the core, then the valve of the valve-lock (2) is closed and the core-extraction device (3) is removed from the valve-lock (2),
- a guide body (4) capable of having the tracer (5) pass through it in a sealed manner is fastened in a sealed manner to the second end (23) of the valve-lock (2), then the valve of the valve-lock (2) is opened,
- the tracer (5) is introduced into the pipe, through the guide body (4), the valve-lock (2) and the purge valve (11).

11. Method for introducing a tracer (5) according to claim 10, **characterised in that** the tracer (5) is introduced into the pipe in a chosen direction, **in that** the tracer (5) is coiled in one direction and **in that** the direction of uncoiling of the tracer (5) is dependent on the chosen direction.

12. Method for introducing a tracer (5) according to one of claims 10 or 11, **characterised in that** the rod (32) of the core-extraction device (3) is hollow and comprises a first open end (33) arranged in such a way as to come in contact with the core, **in that** a purge (35) is fastened to the rod at an opening distinct from the first end (33) and **in that** in order to fasten the core to said rod (32), a decompression is created by placing the rod (32) under air via said purge (35).

13. Method for introducing a tracer (5) according to one of claims 10 to 12, **characterised in that** the method comprises the following steps of removing the tracer (5) and of putting the core back in place:
- the tracer (5) is removed from the pipe at least up to a portion of the valve-lock (2) located between the second end (23) of the valve-lock (2) and the valve of the valve-lock (2),
- the valve of the valve-lock (2) is closed, then the guide body (4) is removed from the second end of the valve-lock (2),
- the core-extraction device (3) is fastened in a sealed manner to the second end (23) of the valve-lock (2),
- the valve of the valve-lock (2) is opened and the rod (32) of the core-extraction device (3) is slid through the valve-lock (2) up to the purge valve (11), the core being attached to the end (33) of the rod (32) of the core-extraction device (3),
- the core is screwed into the purge valve (11) of the pipe, the sealing of the valve (11) is verified, then the rod (32) is removed from the valve (11), and from the lock valve (2),
- the valve-lock (2) is removed.
